# EUROPEAN PATENT SPECIFICATION

(11) **EP 0 519 069 B1**
(45) Date of publication and mention of the grant of the patent: **26.03.1997**
(21) Application number: 91901645.1
(22) Date of filing: 28.12.1990
(51) Int. Cl.: G11B 17/30, G11B 17/22

(54) **AUTOMATIC DISC SELECTOR**
AUTOMATISCHER PLATTENWECHSLER
SELECTEUR AUTOMATIQUE DE DISQUES

(43) Date of publication of application: 23.12.1992
(73) Proprietor: NKK CORPORATION, Tokyo 100 (JP); KABUSHIKI KAISHA NIKKYO SEISAKUSHO, Matsudo-shi, Chiba-ken 271 (JP)
(72) Inventor: KOBAYASHI, Takashi, Chiyoda-ku Tokyo 100 (JP); TAMACHI, Sakae, Matsudod-shi Chiba-ken 271 (JP); OHASHI, Yoshio, Matsudo-shi Chiba-ken 271 (JP); YOSHINO, Kouji, Matsudo-shi Chiba-ken 271 (JP); TOBITANI, Haruhisa, Matsudo-shi Chiba-ken 271 (JP)
(74) Representative: Sajda, Wolf E., Dipl.-Phys.
(86) International application number: PCT/JP90/01730
(87) International publication number: WO 92/12516

(56) References cited:
- EP-A- 0 148 505
- EP-A- 0 353 502
- JP-A- 6 161 262
- JP-A-60 177 465
- JP-A-60 253 058
- JP-A-63 269 373
- US-A- 3 130 393
- PATENT ABSTRACTS OF JAPAN vol. 10, no. 225 (P-484)(2281) 6 August 1986
- IBM TECHNICAL DISCLOSURE BULLETIN. vol. 20, no. 2, July 1977, NEW YORK US pages 691 - 692 E.D.BARKHUFF ET AL 'Transducing separation of slidably mounted flexible disk pack'
- PATENT ABSTRACTS OF JAPAN vol. 6, no. 108 (P-123)18 June 1982

## Description

The invention relates to an automatic disk selecting apparatus comprising: a disk-supporting mechanism arranged in the front portion of a chassis for holding a plurality of storing disks in vertical position and for supporting the storing disks movably in a first lateral direction perpendicular to the surfaces of the disks; a disk-selecting unit drivable in the first lateral direction for selecting one of the plurality of storing disks; a player-moving unit for holding a player, the player-moving unit being adapted to move the player in the first lateral direction and a second lateral direction parallel to the surfaces of the disks; and a disk-returning mechanism for returning the disks to an initial position.

Such an automatic disk-selecting apparatus is known for example from US-A-3 130 393. In this conventional apparatus, the disks are mounted on a drum shaft, wherein the disks can be shifted in the axial direction of the drum shaft in order to provide an access gap between the respective disks. This access gap is arranged at a suitable location so that a transducer assembly comprising an arm holding a plurality of transducing heads can be inserted into the access gap for the purpose of reproducing data recorded on the disks. In this conventional apparatus, the disks are mounted directly on the drum shaft without being provided in storage cases. Also, the disks remain on the drum shaft throughout the operation of the apparatus.

Whereas the document US-A-3 130 393 relates to magnetic disks, a similar apparatus dealing with optical disks is disclosed in the publication JP-A-61-61262. The principle of the latter is mainly the same wherein an optical head is inserted into a gap between two opposite optical disks of a plurality of optical disks mounted on a common shaft.

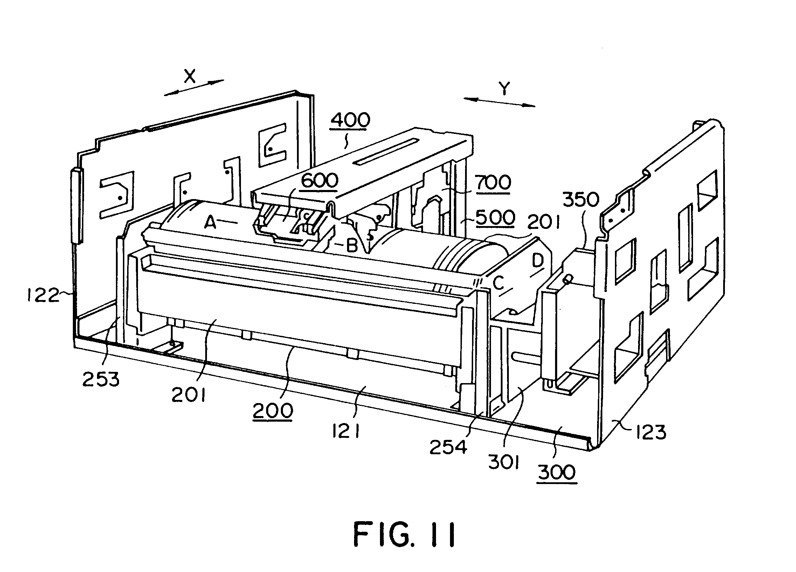

A conventional automatic disk exchanging apparatus as shown in Fig. 11, is disclosed JP-A-61-156 563

The automatic disk exchanging apparatus has the following structure. Disks 201 are put in a main tray mechanical unit 200. To select a predetermined disk, a disk playing mechanical unit 700 moves to a predetermined position in the Y directions, and a disk carrying mechanism 600 operates to pick out the disk from the tray mechanical unit 200, carry the disk in the X directions, and mounts it on the disk playing mechanical unit 700. Information recorded on the disk is thus reproduced.

The above conventional apparatus has the following drawbacks.
1) Precision is required for control of positioning to select a disk. A handling mechanism cannot be quickly moved since it directly handles the disk which is circular. Since the handling mechanism has to perform two operations of clamping and release in order to handle the disk, time (access time) required for removing the disk from the tray mechanical unit and mounting it on the playing mechanical unit is very long, i.e., about 10 seconds.
2) Since a space for carrying the disk is necessary, the apparatus is increased in size.
3) Since the circular disk has to be handled directly, the clamping and holding mechanisms are complicated, with the result that the apparatus is easy to malfunction and expensive.
4) Since the apparatus does not have a mechanism for reversing the disk, information recorded on both sides of the disk cannot be reproduced.

The present invention has been developed to resolve the above drawbacks of the conventional apparatus and its object is to provide a small-sized automatic disk selecting apparatus whose access time is short, structure is simple, and reliability is high.

According to the invention, this object is solved by an automatic disk-selecting apparatus of the type specified above which is characterized in that the disks are contained in storage cases held in the disk-supporting mechanism and the disk-selecting unit is arranged in an upper rear portion of the chassis and comprises a fixing mechanism for fixing the selected one of the plurality of storage cases and a pair of select levers for moving the storage cases on either side of the selected case in opposite directions away from the selected case in the first lateral direction; in that the player-moving unit is arranged in the lower rear portion of the chassis, the player having a disk clamp mechanism disposed in vertical position; and in that the disk-returning mechanism is arranged above the disk-supporting mechanism and comprises a pair of returning arms for returning the disk-storage cases, having been moved in the first lateral direction by the disk-selecting unit, to their initial positions.

According to a further development of the apparatus according to the invention, the disk-supporting mechanism includes slide guides for slidably guiding the storage cases in the first lateral direction.

A specific embodiment of the apparatus according to the invention comprises:
a pair of pinions arranged at the upper portion of each storage case;
a pair of racks arranged in said first lateral direction of the chassis and disposed to engage with the pair of pinions;
a further pinion arranged at a bottom portion of each storage case and adapted to reversely rotate in synchronisation with the pair of pinions; and
a third rack arranged in said first lateral direction of the chassis and disposed to engage with the further pinion;
whereby the storage cases are held in the vertical position when moved by said disk-selecting unit in the first lateral direction.

A still further development of the apparatus according to the invention further comprises:
a pin fixed to an upper end portion of each of the storage cases;
wherein the disk-selecting unit is arranged on a base driven in the first lateral direction and further includes:
a forked fixing member as the fixing mechanism for fixing the pin, the forked fixing member being driven in the second lateral direction; and
the pair of select levers being arranged symmetrically with respect to a center axis of the forked fixing member and being driven in a manner that the select levers are opened and
closed in the first lateral directions opposite to each other; wherein the base is adapted to move laterally to position the forked fixing member opposed to the selected one of the storage cases;
the forked fixing member is adapted to be advanced in the second lateral direction and to engage with the fixed pin of the selected case;
the pair of select levers is adapted to open and thereby engage at end portions with the pins of the storage cases on either side of the selected storage case; and
the storage cases on either side are moved oppositely away from the selected storage case in the first lateral direction, thereby forming a space for inserting in the second lateral direction the player on each side of the selected storage case.

According to a further development of the apparatus according to the invention, the player-moving unit incorporates a mechanism for reversely rotating the player.

According to a still further development of the apparatus according to the invention, a door adapted to be opened and closed is provided at the front surface of the chassis.

In the apparatus according to the invention, the disks are stored in the storage cases one by one and supported by the disk-supporting mechanism so that they can be moved in the right and left directions. Since the storage cases other than the selected storage case are moved in the right and left directions by the select levers of the disk-selecting unit, the supporting mechanism is considerably simpler than that of a conventional apparatus in which a disk is directly handled.

In the apparatus according to the invention, the player is moved by the player-moving unit to the selected storage case fixed by the fixing mechanism of the disk-selecting unit, and the selected disk stored in the storage case is clamped by the clamp mechanism so that information can be reproduced from the disk. The apparatus of the invention can thus be made more compact than a conventional apparatus. By virtue of the structure of the disk-selecting unit, the access time can be considerably shortened with respect to a conventional apparatus. Furthermore, information recorded on both sides of the selected disk can be reproduced by reversely rotating the player using the player-moving unit.

The invention will be explained in more detail below with reference to the accompanying drawings, in which:

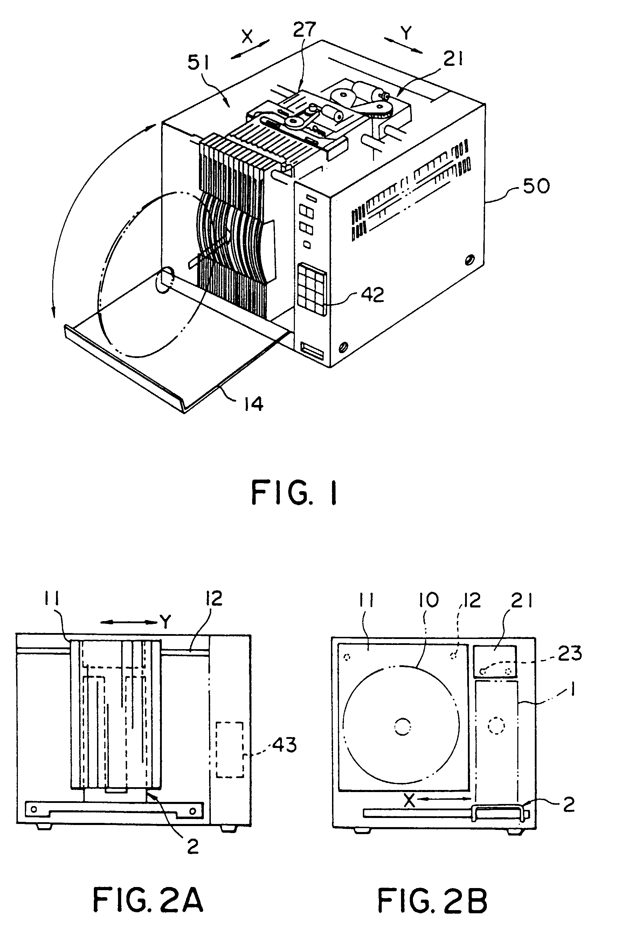

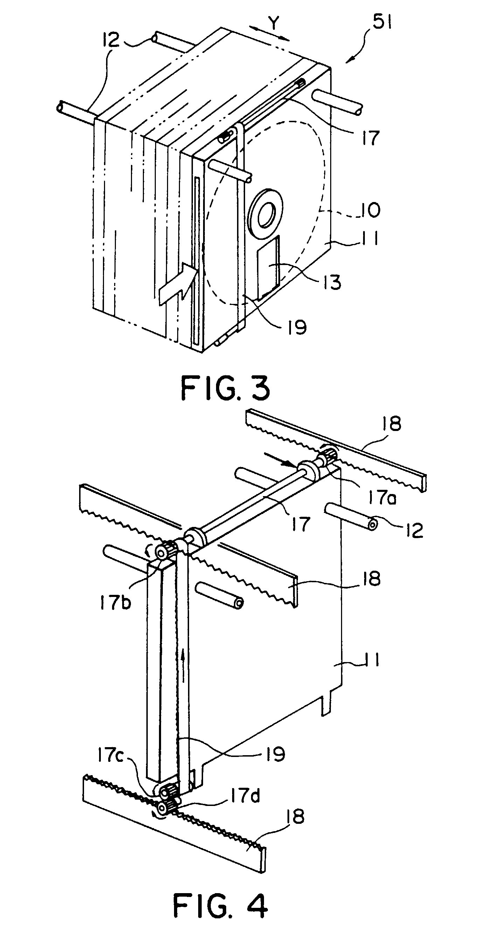

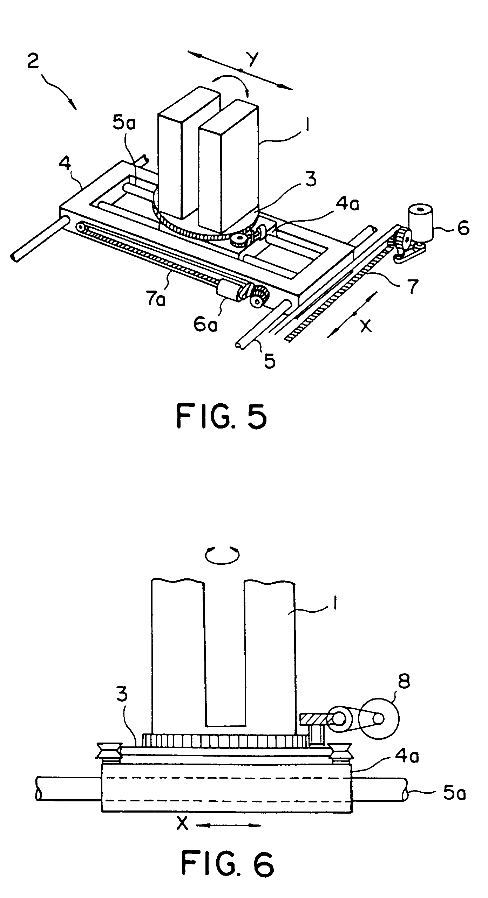

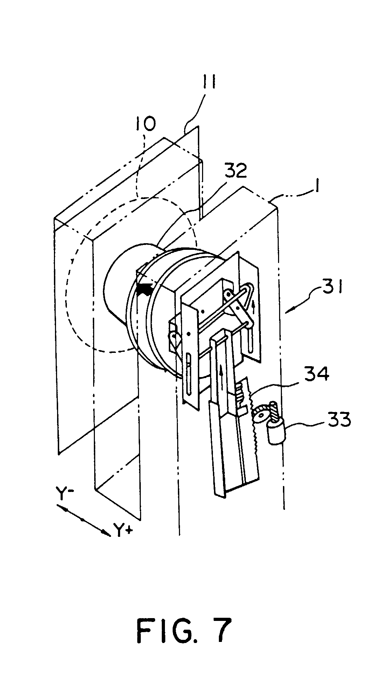

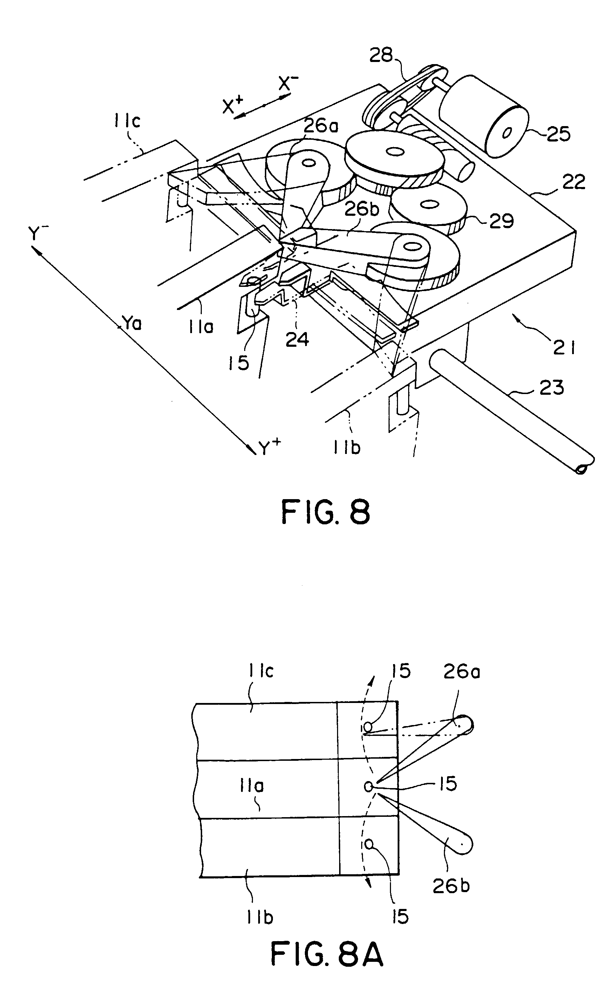

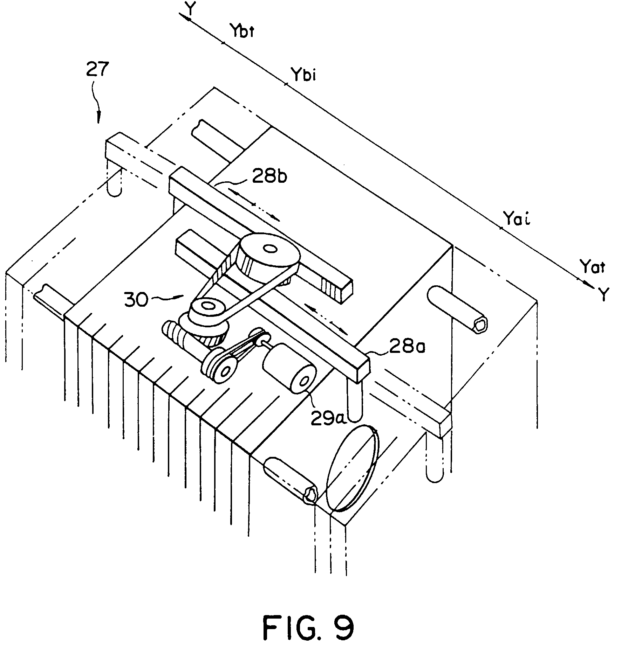

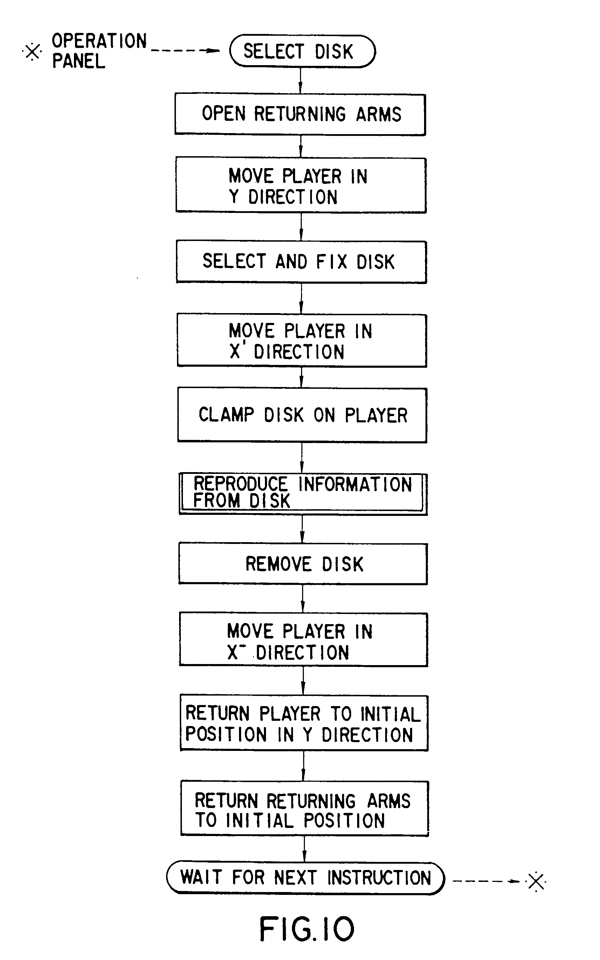

Fig. 1 is a perspective view of an automatic disk selecting apparatus according to one embodiment of the present invention; Figs. 2A and 2B are respectively front and side views of the apparatus shown in Fig. 1; Fig. 3 is a perspective view of a disk supporting mechanism; Fig. 4 is a view for explaining a supporting mechanism for supporting disk storage cases in a vertical state; Fig. 5 is a perspective view of a player moving unit; Fig. 6 is a view for explaining a player reversing mechanism; Fig. 7 is a perspective view of a disk clamp mechanism; Fig. 8 is a perspective view of a disk selecting unit; Fig. 8A is a view for explaining an operation of the disk selecting unit; Fig. 9 is a perspective view of a disk returning mechanism; Fig. 10 is an operation flowchart; and Fig. 11 is a perspective view of a conventional automatic disk exchanging apparatus.

An embodiment of the present invention will now be described with reference to the accompanying drawings.

First, an outline of the entire structure of an automatic disk selecting apparatus according to the embodiment of the present invention will be described with reference to Figs. 1 and 2.

Disks 10 are stored in a plurality of storage cases 11 one by one. A supporting mechanism 51 for supporting the cases 11 movably in the right and left (Y) directions is provided in front of a body case 50. The disks 10 stored in the storage cases 11 are exchanged with one another by opening a door 14 provided in front of the body case.

A disk selecting unit 21 having a fixing mechanism for fixing a selected one of the storage cases 11 and select levers for moving the storage cases 11 other than the selected one of them in the right and left directions, is provided behind the body case 50 so that it can be moved in the right and left (Y) directions.

A player-moving unit 2 for moving the player 1 back and forth, right and left in a vertical state and reversely rotating it, is provided behind the body case 50.

A disk returning mechanism 27 for returning the disk storage case 11 to the initial position is provided above a disk supporting mechanism 51.

A computer 43 for sequentially controlling an operation of each of the above structural elements is arranged in the body case 50, while its operation panel 42 is arranged in front thereof.

The respective structural elements of the apparatus will be sequentially described in detail with reference to the accompanying drawings.

Fig. 3 is a perspective view of the disk supporting mechanism 51.

The disks 10 are stored in the storage cases 11 one by one. The storage cases 11 are supported movably in the right and left (Y) directions by means of two slide guides 12 passing through the body case 50. The storage cases 11 each have a window 13 for reading a signal when the player 1 is mounted.

Further, the automatic disk selecting apparatus comprises a holding mechanism for vertically holding the storage cases 11 to guide them smoothly by the slide guides 12 when the storage cases 11 are moved in the right and left directions by the disk selecting unit 21 (which will be described in detail later). The holding mechanism is constructed as shown in Fig. 4. A shaft 17 having pinions 17a and 17b at its both ends is mounted on the top of the storage case 11. A pinion 17c is mounted on one end of the undersurface of the storage case 11. Three racks 18 pass on the body case 50. The pinions 17a and 17b are directly engaged with the racks 18, and the pinion 17c is engaged with the rack 18 with a pinion 17d interposed therebetween. A timing belt 19 is wound on the pinions 17b and 17c. when the storage case 11 is moved by the slide guides 12, the pinion 17c is rotated in synchronization with rotation of the pinion shaft 17. Since the storage case 11 is thus supported at the upper two points and the lower one point, it can be moved in the vertical state.

The player-moving unit 2 will now be described, with reference to Figs. 5 and 6.

The player-moving unit 2 includes a moving frame 4 moved in the back and forth (X) directions and a moving table 4a arranged on the moving frame 4 and moved in the right and left (Y) directions. The player 1 is mounted on the moving table 4a with a turn table 3 interposed therebetween so that the player 1 can be reversely rotated.

The moving frame 4 is guided by a slide guide 5 passing through the body case and moved in the back and forth (X) directions by means of a timing belt 7 driven by a motor 6. Similarly, the moving table 4a is guided by a slide guide 5a and moved in the right and left (Y) directions by means of a timing belt 7a driven by a motor 6a. The player 1 is reversely rotated by a gear train driven by a motor 8.

The player 1 includes a disk clamp mechanism 31 as shown in Fig. 7. The disk 10 is clamped and released by moving a spindle shaft 32 back and forth in the Y directions through a link by means of a rack 34 which is moved up and down by a motor 33.

The disk selecting unit 21 will now be described, with reference to Fig. 8.

A base 22 is guided by a slide guide 23 and moved in the Y directions by the same mechanism as that for moving the above moving frame 4 in the Y directions.

A pole 15 is attached to the upper end of the disk storage case 11 to fix the storage case. A forked fixing mechanism 24 for holding the pole 15 is attached to one end of the base 22 in such a manner that it is moved back and forth in the X directions. A pair of select levers 26a and 26b each having an edge portion which is to be inserted between the poles 15 attached to the upper end of the disk storage case 11 is arranged on the base 22 so that the select levers 26a, 26b can be rotated in directions opposite to each other. The select levers 26a, 26b are rotated by means of a gear train 29 driven by a motor 25 and a belt 28, and the fixing mechanism 24 is moved back and forth by a pinion and a rack mechanism (not shown) driven by the motor 25.

The disk returning mechanism 27 will now be described, with reference to Fig. 9.

A pair of returning arms 28a and 28b each having an L-shaped end portion, is driven so that the returning arms 28a, 28b are moved in directions opposite to each other by means of a gear train 30 driven by a motor 29a.

As one operation of the apparatus of the present invention, reproduction of information recorded on a selected disk stored in a storage case 11a will now be described. Fig. 10 is a flowchart showing an outline of the operation.

If the reproduction is instructed by an operation panel 42, the player moving unit 2 is operated to move the player 1 in the Y directions and stop it at Ya (in Fig. 8) where the player 1 coincides with the storage case 11a to be selected.

The returning arms 28a and 28b of the disk returning mechanism 27 are opened to the positions indicated by one-dash-two-dot lines in Fig. 9. The end portions of the returning arms 28a, 28b are fixed to positions Yat and Ybt.

The base 22 of the disk selecting unit 21 is then moved in the Y directions to make the position of the fixing mechanism 24 coincident with the storage case lla. The fixing mechanism 24 is moved in the X directions and engaged with the pole 15 of the storage case lla, thereby fixing the storage case 11a. The select levers 26a and 26b are rotated as indicated by one-dash-two-dot lines in Figs. 8 and 8A, and the storage cases other than the storage case 11a are moved in the Y directions by engaging the end portions of the select levers 26a, 26b with the pole 15 to make a space, into which the player 1 is inserted, between the storage cases 11a and 11b and between the storage cases 11a and 11c.

The player 1 is moved in the X directions by the player moving unit 2 to make the center of the player 1 coincident with that of the selected disk. The selected disk is clamped by the clamp mechanism 31 and mounted on the player 1.

In this state, information recorded on the selected disk is reproduced as a voice by an external speaker, an image by an external TV set, etc.

After the reproduction, an operation opposite to the above is performed to return the storage case to the initial position and return the returning arms 28a and 28b to the positions indicated by solid lines in Fig. 9. Setting the end portions of the returning arms 28a, 28b to the positions Yai and Ybi, the space between the storage cases is closed.

When the player 1 is designed to reproduce information recorded on one side of a disk, the same operation as above can be performed. However, when the player 1 is designed to reproduce information recorded on both sides of a disk, the above operation has only to be performed after the player 1 is returned to the X directions and reversely rotated.

The above operation is automatically performed by the computer 43 if necessary information is input using the operation panel 42.

If the disk 10 is exchanged with another disk, the disk exchange door 14 has only to be opened.

The present invention can be widely applied to not only a laser disk, a CD, a CD-ROM, and tracking and erasable optical disks, but also a magnetic disk such as a hard disk and a floppy disk.

Further, the present invention can be applied to disks having diameters of 30,48 cm (12 inch), 20,32 cm (8 inch), 13,34 cm (5,25 inch) and 8,89 cm (3,5 inch).

As described above, since the disks are stored in the storage cases one by one and supported by the supporting mechanism movably in the right and left directions, and the storage cases other than the selected one of them are moved in the right and left directions by the select levers of the disk selecting unit, the automatic disk selecting apparatus of the present invention is considerably simpler than the conventional apparatus in which a circular disk is directly handled.

Since the player-moving unit moves the player to the storage case fixed by the fixing mechanism of the disk-selecting unit, and the disk is clamped by the clamp mechanism to reproduce information recorded on the disk, the apparatus can be made smaller than the conventional apparatus. Furthermore, the access time can be decreased to about 5 seconds and is extremely shorter than that of the conventional apparatus.

Since the player is reversely rotated by the player moving unit, information recorded on both sides of the disk can be reproduced.

## Claims

1. An automatic disk-selecting apparatus comprising:
a disk-supporting mechanism (51) arranged in the front portion of a chassis (50) for holding a plurality of storing disks (10) in vertical position and for supporting the storing disks (10) movably in a first lateral direction (Y) perpendicular to the surfaces of the disks (10);
a disk-selecting unit (21) drivable in said first lateral direction (Y) for selecting one of said plurality of storing disks (10);
a player-moving unit (2) for holding a player (1), the player-moving unit (2) adapted to move the player in said first lateral direction and a second lateral direction (X) parallel to the surfaces of the disks (10);
a disk-returning mechanism (27) for returning the disks (10) to an initial position;
characterized in that
said disks (10) are contained in storage cases (11) held in said disk-supporting mechanism (51) and said disk-selecting unit (21) is arranged in an upper rear portion of said chassis (50) and comprises a fixing mechanism (24) for fixing said selected one of the plurality of storage cases (11) and a pair of select levers (26a, 26b) for moving the storage cases (11) on either side of the selected case (11a) in opposite directions away from the selected case (11a) in the first lateral direction (Y);
said player-moving unit (2) is arranged in the lower rear portion of the chassis (50), said player (1) having a disk clamp mechanism (31) disposed in vertical position; and
said disk-returning mechanism (27) is arranged above said disk-supporting mechanism (51) and comprises a pair of returning arms (28a, 28b) for returning the disk-storage cases (11), having been moved in the first lateral direction (Y) by said disk-selecting unit (21), to their initial positions.

2. The automatic disk-selecting apparatus according to claim 1, wherein said disk-supporting mechanism (51) includes slide guides (12) for slidably guiding the storage cases (11) in said first lateral direction (Y).

3. The automatic disk-selecting apparatus according to claim 1 or 2, further comprising:
a pair of pinions (17a, 17b) arranged at the upper portion of each storage case (11);
a pair of racks (18) arranged in said first lateral direction (Y) of the chassis (50) and disposed to engage with said pair of pinions (17a, 17b);
a further pinion (17d) arranged at a bottom portion of each storage case (11) and adapted to reversely rotate in synchronisation with said pair of pinions (17a, 17b); and
a third rack (18) arranged in said first lateral direction (Y) of the chassis (50) and disposed to engage with said further pinion (17d);
whereby said storage cases (11) are held in said vertical position when moved by said disk-selecting unit (21) in said first lateral direction (Y).

4. The automatic disk-selecting apparatus according to any of claims 1 to 3, further comprising:
a pin (15) fixed to an upper end portion of each of said storage cases (11);
wherein said disk-selecting unit (21) is arranged on a base (22) driven in said first lateral direction (Y) and further includes:
a) a forked fixing member (24) as said fixing mechanism for fixing said pin (15), the forked fixing member (24) being driven in said second lateral direction (X); and
b) the pair of select levers (26a, 26b) being arranged symmetrically with respect to a center axis of said forked fixing member (24) and being driven in a manner that said select levers (26a, 26b) are opened and closed in first lateral directions (Y) opposite to each other;
wherein said base (22) is adapted to move laterally to position the forked fixing member (24) opposed to said selected one (lla) of the storage cases (11);
said forked fixing member is adapted to be advanced in said second lateral direction (X) and to engage with the fixed pin (15) of said selected case (11a) ;
said pair of select levers (26a, 26b) is adapted to open and thereby engage at end portions with the pins (15) of the storage cases (11b, 11c) on either side of said selected storage case (11a) ; and
said storage cases on either side are moved oppositely away from the selected storage case (11a) in said first lateral direction (Y), thereby forming a space for inserting in said second lateral direction (X) said player (1) on each side of the selected storage case (11a).

5. The automatic disk-selecting apparatus according to any of claims 1 to 4, wherein said player-moving unit (2) incorporates a mechanism (3) for reversely rotating the player (1).

6. The automatic disk-selecting apparatus according to any of claims 1 to 5, wherein a door (14) adapted to be opened and closed is provided at the front surface of the chassis (50).

## Patentansprüche

1. Automatische Plattenwählvorrichtung, die folgendes aufweist:
einen Plattenträgermechanismus (51), der im Frontbereich eines Rahmens (50) angeordnet ist, um eine Vielzahl von Speicherplatten (10) in vertikaler Position zu halten und die Speicherplatten in einer ersten seitlichen Richtung (Y) senkrecht zu den Oberflächen der Platten (10) bewegbar abzustützen;
eine Plattenwähleinheit (21), die in der esten seitlichen Richtung (Y) antreibbar ist, um eine aus der Vielzahl von Speicherplatten (10) auszuwählen;
eine Abspieleinrichtung-Bewegungseinheit (2) zum Halten einer Abspieleinrichtung (1), wobei die Abspieleinrichtung-Bewegungseinheit (2) dazu ausgebildet ist, die Abspieleinrichtung in der ersten seitlichen Richtung und einer zweiten seitlichen Richtung (X) parallel zu den Oberflächen der Platten (10) zu bewegen;
einen Plattenrückführungsmechanismus (27), um die Platten (10) in eine Ausgangsposition zurückzuführen;
dadurch gekennzeichnet,
daß die Platten (10) in Aufbewahrungshüllen (11) enthalten sind, die in dem Plattenträgermechanismus (51) gehalten sind, und die Plattenwähleinheit (21) in einem oberen rückwärtigen Bereich des Rahmens (50) angeordnet ist und einen Festlegemechanismus (24) zum Festlegen der einen ausgewählten Aufbewahrungshülle aus der Vielzahl von Aufbewahrungshüllen (11) und ein Paar von Wählhebeln (26a, 26b) aufweist, um die Aufbewahrungshüllen (11) auf beiden Seiten der ausgewählten Hülle (lla) in entgegengesetzten Richtungen von der ausgewählten Hülle (lla) weg in der ersten seitlichen Richtung (Y) zu bewegen;
daß die Abspieleinrichtung-Bewegungseinheit (2) in dem unteren rückwärtigen Bereich des Rahmens (50) angeordnet ist, wobei die Abspieleinrichtung (1) einen in vertikaler Position angeordneten Plattenklemm-Mechanismus (31) hat;
und daß der Plattenrückführungsmechanismus (27) über dem Plattenträgermechanismus (51) angeordnet ist und ein Paar von Rückführarmen (28a, 28b) aufweist, um die Plattenaufbewahrungshüllen (11), nachdem sie von der Plattenwähleinheit (21) in der ersten seitlichen Richtung (Y) bewegt worden sind, in ihre Ausgangspositionen zurückzuführen.

2. Automatische Plattenwählvorrichtung nach Anspruch 1, wobei der Plattenträgermechanismus (51) Gleitführungen (12) aufweist, um die Aufbewahrungshüllen (11) in der ersten seitlichen Richtung (Y) gleitbar zu führen.

3. Automatische Plattenwählvorrichtung nach Anspruch 1 oder 2, die ferner folgendes aufweist:
ein Paar von Ritzeln (17a, 17b), die an dem oberen Bereich jeder Aufbewahrungshülle (11) angeordnet sind; ein Paar von Zahnstangen (18), die in der ersten seitlichen Richtung (Y) des Rahmens (50) angeordnet und dazu vorgesehen sind, mit dem Paar von Ritzeln (17a, 17b) in Eingriff zu gelangen;
ein weiteres Ritzel (17d), das an einem unteren Bereich jeder Aufbewahrungshülle (11) angeordnet und dazu ausgebildet ist, sich synchron mit dem Paar von Ritzeln (17a, 17b) entgegengesetzt zu drehen; und eine dritte Zahnstange (18), die in der ersten seitlichen Richtung (Y) des Gehäuses (50) angeordnet und dazu vorgesehen ist, mit dem weiteren Ritzel (17d) in Eingriff zu gelangen;
so daß dadurch die Aufbewahrungshüllen (11) in der vertikalen Position gehalten werden, wenn sie von der Plattenwähleinheit (21) in der ersten seitlichen Richtung (Y) bewegt werden.

4. Automatische Plattenwählvorrichtung nach einem der Ansprüche 1 bis 3, die ferner folgendes aufweist:
einen Zapfen (15), der an einem oberen Endbereich von jeder der Aufbewahrungshüllen (11) befestigt ist;
wobei die Plattenwähleinheit (21) auf einer Basis (22) angeordnet ist, die in der ersten seitlichen Richtung (Y) angetrieben wird, und ferner folgendes aufweist:
a) ein gegabeltes Festlegeelement (24) als Festlegemechanismus zum Festlegen des Zapfens (15), wobei das gegabelte Festlegeelement (24) in der zweiten seitlichen Richtung (X) angetrieben wird; und
b) wobei das Paar von Wählhebeln (26a, 26b) in bezug auf eine Mittelachse des gegabelten Festlegeelements (24) symmetrisch angeordnet ist und auf solche Weise angetrieben wird, daß die Wählhebel (26a, 26b) in ersten seitlichen Richtungen (Y) entgegengesetzt zueinander geöffnet und geschlossen werden;
wobei die Basis (22) für eine seitliche Bewegung ausgebildet ist, um das gegabelte Festlegeelement (24) entgegengesetzt zu der ausgewählten einen (11a) der Aufbewahrungshüllen (11) zu positionieren;
wobei das gegabelte Festlegeelement dazu ausgebildet ist, in der zweiten seitlichen Richtung (X) vorwärtsbewegt zu werden und mit dem festen Zapfen (15) der ausgewählten Hülle (lla) in Eingriff zu gelangen;
wobei das Paar von Wählhebeln (26a, 26b) dazu ausgebildet ist, sich zu öffnen und dadurch an Endbereichen mit den Zapfen (15) der Aufbewahrungshüllen (11b, 11c) auf beiden Seiten der ausgewählten Aufbewahrungshülle (11a) in Eingriff zu gelangen; und
wobei die Aufbewahrungshüllen auf beiden Seiten entgegengesetzt zueinander in der ersten seitlichen Richtung (Y) von der ausgewählten Aufbewahrungshüllse (11a) wegbewegt werden, um so einen Zwischenraum zu bilden, um in der zweiten seitlichen Richtung (X) die Abspieleinrichtung (1) auf jeder Seite der ausgewählten Aufbewahrungshülle (lla) einzuführen.

5. Automatische Plattenwählvorrichtung nach einem der Ansprüche 1 bis 4,
wobei die Abspieleinrichtung-Bewegungseinheit (2) einen Mechanismus (3) enthält, um die Abspieleinrichtung (1) in Gegenrichtung zu drehen.

6. Automatische Plattenwählvorrichtung nach einem der Ansprüche 1 bis 5,
wobei an der vorderen Oberfläche des Rahmens (50) eine Tür (14) vorgesehen ist, die dazu ausgebildet ist, geöffnet und geschlossen zu werden.

## Revendications

1. Appareil de sélection automatique de disques comprenant :
un mécanisme de support de disques (51) disposé dans la partie avant d'un boîtier (50) pour maintenir une pluralité de disques rangés (10) en position verticale et pour supporter les disques rangés (10) de manière mobile dans une première direction latérale (Y) perpendiculaire aux surfaces des disques (10) ;
une unité de sélection de disques (21) pouvant être entraînée dans ladite première direction latérale (Y) pour sélectionner un disque (10) parmi ladite pluralité de disques rangés;
une unité (2) de déplacement de lecteur pour maintenir un lecteur (1), l'unité (2) de déplacement de lecteur étant adaptée pour déplacer le lecteur dans ladite première direction latérale et dans une deuxième direction latérale (X) parallèle aux surfaces des disques (10);
un mécanisme de retour des disques (27) pour retourner les disques (10) dans une position initiale;
caractérisé en ce que
lesdits disques (10) sont contenus dans des coffrets de rangement (11) maintenus dans ledit mécanisme de support de disques (51) et ladite unité de sélection de disques (21) est disposée dans une partie arrière supérieure dudit boîtier (50) et comprend un mécanisme de fixation (24) pour fixer ledit un coffret sélectionné parmi la pluralité de coffrets de rangement (11) et une paire de leviers de sélection (26a, 26b) pour déplacer les coffrets de rangement (11) de part et d'autre du coffret sélectionné (11a) dans des directions opposées s'écartant du coffret sélectionné (11a) dans la première direction latérale (Y);
ladite unité (2) de déplacement de lecteur est disposée dans la partie arrière inférieure du boîtier (50), ledit lecteur (1) ayant un mécanisme de serrage de disque (31) installé en position verticale; et
ledit mécanisme de retour des disques (27) est disposé au-dessus dudit mécanisme de support de disques (51) et comprend une paire de bras de retour (28a, 28b) pour retourner les coffrets de rangement des disques (11) ayant été déplacés dans la première direction latérale (Y) par ladite unité (21) de sélection de disques, dans leurs positions initiales.

2. Appareil de sélection automatique de disques selon la revendication 1, dans lequel ledit mécanisme de support de disques (51) comporte des glissières (12) pour guider à coulissement les coffrets de rangement (11) dans ladite première direction latérale (Y).

3. Appareil de sélection automatique de disques selon la revendication 1 ou 2, comprenant en outre :
une paire de pignons (17a, 17b) disposés dans la partie supérieure de chaque coffret de rangement (11);
une paire de crémaillères (18) disposées dans ladite première direction latérale (Y) du boîtier (50) et installées de manière à venir en prise avec ladite paire de pignons (17a, 17b);
un autre pignon (17d) disposé dans une partie de fond de chaque coffret de rangement (11) et adapté pour tourner dans le sens inverse de manière synchronisée avec ladite paire de pignons (17a, 17b); et
une troisième crémaillère (18) disposée dans ladite première direction latérale (Y) du boîtier (50) et installée pour venir en prise avec ledit autre pignon (17d);
lesdits coffrets de rangement (11) étant maintenus dans ladite position verticale lorsqu'ils sont déplacés par ladite unité de sélection de disques (21) dans ladite première direction latérale (Y).

4. Appareil de sélection automatique de disques selon l'une quelconque des revendications 1 à 3, comprenant en outre :
une goupille (15) fixée à une partie d'extrémité supérieure de chacun des coffrets de rangement (11);
dans lequel ladite unité de sélection de disques (21) est disposée sur une base (22) entraînée dans ladite première direction latérale (Y) et comporte en outre :
a)un organe de fixation fourché (24) en tant que dit mécanisme de fixation pour fixer ladite goupille (15), l'organe de fixation fourché (24) étant entraîné dans ladite deuxième direction latérale (X);
et
b)la paire de leviers de sélection (26a, 26b) disposés symétriquement par rapport à un axe central dudit organe de fixation fourché (24) et entraînés de manière telle que lesdits leviers de sélection (26a, 26b) s'ouvrent et se ferment dans les premières directions latérales (Y) l'un en face de l'autre;
dans lequel ladite base (22) est adaptée pour se déplacer latéralement pour positionner l'organe de fixation fourché (24) en face dudit coffret sélectionné (11a) parmi les coffrets de rangement (11);
ledit organe de fixation fourché est adapté pour être avancé dans ladite deuxième direction latérale (X) et pour venir en prise avec la goupille fixe (15) dudit coffret sélectionné (11a) ;
ladite paire de leviers de sélection (26a, 26b) est adaptée pour s'ouvrir et pour ainsi venir en prise à des parties d'extrémité avec les goupilles (15) des coffrets de rangement (llb, llc) de chaque côté dudit coffret de rangement sélectionné (11a) ; et
lesdits coffrets de rangement de chaque côté sont déplacés dans des directions opposées s'éloignant du coffret de rangement sélectionné (lla) dans ladite première direction latérale (Y), en formant ainsi un espace pour insérer dans ladite deuxième direction latérale (X) ledit lecteur (1) de chaque côté du coffret de rangement sélectionné (11a) .

5. Appareil de sélection automatique de disques selon l'une quelconque des revendications 1 à 4, dans lequel ladite unité (2) de déplacement de lecteur incorpore un mécanisme (3) pour faire tourner le lecteur en sens inverse (1).

6. Appareil de sélection automatique de disques selon l'une quelconque des revendications 1 à 5, dans lequel une porte (14) adaptée pour s'ouvrir et se fermer est prévue au niveau de la surface avant du boîtier. (50).
